# EUROPEAN PATENT APPLICATION

(11) **EP 2 086 168 A1**
(43) Date of publication of application: **05.08.2009**
(21) Application number: 07816891.1
(22) Date of filing: 26.11.2007
(51) Int. Cl.: H04L 12/24

(54) **SERVICE PROCESSING METHOD, NETWORK DEVICE AND SERVICE PROCESSING SYSTEM**

(30) Priority: 27.11.2006 CN 200610140328
(71) Applicant: Huawei Technologies Co., Ltd., Longgang District Shenzhen Guangdong 518219 (CN)
(72) Inventor: WU, Jvye, Shenzhen Guangdong 518129 (CN)
(74) Representative: Körber, Martin Hans
(86) International application number: PCT/CN2007/003336
(87) International publication number: WO 2008/064562

(57) **Abstract**

A service processing method, a network device and a service processing system are disclosed. The method includes: determining whether a frequency of a service request initiated by a user exceeds a set value according to user information carried in the received service request; discarding the service request, if the frequency of the service request exceeds the set value; and transmitting the service request, if the frequency of the service request does not exceed the set value. Determining whether the frequency of the service request initiated by the user exceeds the set value comprises: inquiring whether there exists a control table corresponding to user information and service content carried in the service request; determining whether the frequency of the service request exceeds the set value according to the control table, if there exists the control table; and establishing the control table of the service request according to the user information and the service content, if there does not exist the control table, and transmitting the service request.

## Description

### FIELD

The present disclosure relates to the field of communication technology, and in particular, to a service processing method, a network device and a service processing system.

### BACKGROUND

As Internet continuously expands, the number of users on Internet has been increasing, and devices in the network, such as Digital Subscriber Line Access Multiplexer ( DSLAM), layer 2 switch (Lanswitch), Broadband access server (BAS), Broadband remote access server (BRAS), Service router (SR) and router, are becoming more and more, and the devices have more powerful functions and higher performances. The lower the level of an access device in a network is, the lower the security requirement on it is, however the more access devices may be on the network and the more difficult the management is. Improvements of device performance and developments of various reliability techniques enable network devices for managing users' access devices to more and more important in a network, from an access layer, namely, a user access-oriented interface, which is the origin as well as the termination of the network, to a peripheral convergence layer, from the peripheral convergence layer to the convergence layer, namely, the convergence of devices in the access layer, and from the convergence layer to the core peripheral layer. As the importance of network devices becomes higher in the network, not only higher requirements arise for functions and performances of network devices themselves, but also more rigorous requirements arise for stability and security of these network devices. For a lower stability, the network tends to be interrupted frequently, which may influence users' normal use of the network and hence result in severe loss of users and reduced satisfaction for network operators. Whereas for a lower security of network devices, the devices are very likely to be "attacked" with or without intention from the network and the network may also be interrupted, which also leads to loss of users. In addition, servers operating in the network are not perfect in terms of performance and security. If a network device lacks protection for high-level servers, e.g. avoiding attacks of large amount of messages such as authentication or accounting, other normal service requests may be terminated because servers can not process enormous numbers of service requests simultaneously and for severe case, even all services may be terminated directly, which may also cause the network abnormal or unavailable. Therefore, certain requirements are exerted on network inhibiting capacities of network devices. That is, network devices themselves can not be attacked easily, but also certain measures should be provided for suppressing attacks on the high-level servers such as AAA (Authorization, Authentication and Accounting) server in order to reduce attacks on these servers, allowing them to operate normally and continue to provide services for other users. Therefore, with the development of networks, network providers and content providers pay more and more attentions to network stability and security. A stable and secure network is critical for improving service quality and enhancing overall customer satisfaction as well as decreasing network operating costs and improving network profits.

In the prior art, a high-level server is protected by using one of the following methods:

1. The network device protects a server by limiting traffics transmitted to the server. However, because a user's service request is suppressed before receiving the user's service request, the user may constantly re-initiate the service request after failing in transmitting the service request and the network device may also constantly respond to the service request, which again causes worse congestion of the network and directly influences service requests from other users.

2. The network device is connected to master server and backup server at the same time. Under normal conditions, the master server provides services. In case that the master server is attacked and becomes abnormal, the network device switches a service request onto the backup server. Then, the backup server processes the service request. However, the backup server may also be attacked and may terminate services, which causes all servers unavailable and influences normal operation of the network.

3. The network device is connected to a plurality of servers at the same time, and according to each server's current processing loads, new service requests are allocated to a server, so as to balance loads on servers. Thus, loads on each server are reduced in case that network services are not very busy. Nevertheless, in case that a user attacks a server, if the number of attacks reaches a certain degree, even if the plurality of servers operate with load balancing, they may all terminate services because all these servers are attacked. Therefore, it is impossible to prevent a high-level server from being attacked at all.

4. A server is improved by adding a server suppression function to suppress service requests transmitted by the downstream network devices connected thereto. This limits normal service requests and influences normal services. Further, improving servers increases costs of servers and economic burdens of operators.

### SUMMARY

Various embodiments of the present disclosure are directed to a technical problem that network congestion is caused because a server need to process large amount of invalid messages and processing of normal service requests is influenced.

To solve the above-mentioned technical problem, an embodiment of the present disclosure provides a service processing method including:
determining whether a frequency of a service request initiated by a user exceeds a set value according to user information carried in the received service request;
discarding the service request, if the frequency of the service request exceeds the set value; and
transmitting the service request, if the frequency of the service request does not exceed the set value.

In the above-mentioned service processing method, the process of determining whether the frequency of the service request initiated by the user exceeds the set value includes:
inquiring whether there exists a control table corresponding to user information and service content carried in the service request;
determining whether the frequency of the service request exceeds the set value according to the control table, if there exists the control table; and
establishing the control table of the service request according to the user information and the service content, if there does not exist the control table, wherein the user information, the service content of the service request, a starting timing, the number of times of the request and the set value being recorded in the established control table, and transmitting the service request.

The user information is an MAC address, a user name or an IP address.

After discarding the service request or transmitting the service request, the timing of the last service request and the number of times of the service request in the control table are further updated.

The above-mentioned method further includes: deleting the control table of the service request if no service request transmitted from the user is received in a predetermined time after the timing of the last service request.

In addition, the above-mentioned service processing method further includes:
determining whether the service request is supported, after a network device receives the service request;
performing the process of determining whether the frequency at which the user initiates the service request exceeds the set value according to the user information carried in the received service request, if the service request is supported;
forwarding the service request to another network device that supports the service request, if the service request is not supported; and
receiving, by the another network device, the service request and then performing the step of determining whether the frequency at which the user initiates the service request exceeds the set value according to the user information carried in the received service request.

In addition, the above-mentioned service processing method further includes:
determining whether the number of the service requests currently processed by a server is less than a preset value according to an address of the server that processes the service request carried in the service request, after the network device receives the service request;
performing the process of determining whether the frequency at which the user initiates the service request exceeds the set value according to the user information carried in the received service request, if the number of the service requests currently processed by the server is less than the preset value; and
discarding the service request, if the number of the service requests currently processed by the server is not less than the preset value.

The process of transmitting the service request includes:
determining, by the network device, whether operation status of the server that is currently processing the service request is normal;
transmitting the service request to the server, if the operation status of the server that is currently processing the service request is normal; and
transmitting the service request to a backup server both which and the server serve as a backup of each other, if the operation status of the server that is currently processing the service request is not normal.

Alternatively, the process of transmitting the service request includes:
transmitting, by the network device, the service request to a server with a smallest load among a plurality of servers that can process the service request.

An embodiment of the present disclosure provides a network device, including:
a receiving module, configured to receive a service request;
an inquiry module, configured to inquire in a control table storage module whether there exists a control table corresponding to user information and a service content carried in the received service request;
a control table establishing module, configured to establish the control table of the service request, and to record a service content of the service request, a starting timing, the timing of a last request, the number of times of the request and the set value in the control table;
a frequency comparing module, configured to determine whether the frequency of the service request exceeds the set value according to the control table;
a suppressing module, configured to discard a service request having a frequency greater than the set value; and
a transmitting module, configured to transmit a service request having a frequency not greater than the set value.

The above-mentioned network device further includes a control table storage module, configured to store a control table that includes user information, service content of a user request, a starting timing of the service request, the timing of the last request, the number of times of the request and a set value.

The above-mentioned network device further includes an updating module, configured to update the timing of the last service request and the number of times of the service request in the control table.

The above-mentioned network device further includes a deleting module, configured to delete the control table of the service request if no service request transmitted from the user is received in a predetermined time after the timing of the last service request.

The above-mentioned network device further includes an authentication module, configured to determine whether the service request is supported, and the network device forwards the service request to another network device that supports the service request, if the service request is not supported.

The above-mentioned network device further includes a number comparing module, configured to determine whether the number of service requests currently processed by the server is less than a preset value according to an address of the server that processes the service request carried in the service request, to transmit the service request to the inquiry module if the number of service requests currently processed by the server is less than the preset value, and to transmit the service request to the suppressing module if the number of service requests currently processed by the server is not less than the preset value.

The above-mentioned network device further includes a status detection module, configured to determine whether operation status of the server that is currently processing the service request is normal, to transmit the service request to the server if the operation status of the server that is currently processing the service request is normal, and to transmit the service request to a backup server if the operation status of the server that is currently processing the service request is not normal.

The above-mentioned network device further includes a forwarding module, configured to transmit the service request to a server with a smallest load among a plurality of servers that can process the service request.

An embodiment of the present disclosure provides a service processing system including a server for processing service requests, and the service processing system further including a network device including:
a receiving module, configured to receive a service request;
a control table storage module, configured to store a control table including user information, a service content of a user request, a starting timing of the service request, the timing of a last request, the number of times of the request and the set value;
an inquiry module, con figured to inquire in the control table storage module whether there exists the control table corresponding to the user information and the service content carried in the received service request;
a frequency comparing module, configured to determine whether the frequency of the service request exceeds the set value according to the control table;
a suppressing module, configured to discard a service request having a frequency greater than the set value; and
a transmitting module, configured to transmit a service request having a frequency not greater than the set value.

In the above-mentioned service processing system, the network device further includes a control table establishing module, configured to establish the control table of the service request, and to record the service content of the service request, the starting time, the timing of the last request, the number of times of the request and the set value in the control table.

In the above-mentioned service processing system, the network device further includes an updating module, configured to update the timing of the last request and the number of times of the request in the control table.

In the above-mentioned service processing system, the network device further includes a deleting module, configured to delete the control table of the service request if no service request transmitted from the user is received in a predetermined time after the timing of the last request.

In the above-mentioned service processing system, the network device further includes an authentication module, configured to determine whether the service request is supported.

In the above-mentioned service processing system, the network device further includes a number comparing module, configured to determine whether the number of service requests currently processed by the server is less than a preset value according to an address of the server that processes the service request carried in the service request, to transmit the service request to the inquiry module if the number of service requests currently processed by the server is less than the preset value, and to transmit the service request to the suppressing module if the number of service requests currently processed by the server is not less than the preset value.

The above-mentioned service processing system further includes a backup server both which and the server serve as a backup of each other. The network device further includes a status detection module, configured to determine whether operation status of the server that is currently processing the service request is normal, to transmit the service request to the server if the operation status of the server that is currently processing the service request is normal, and to transmit the service request to the backup server if the operation status of the server that is currently processing the service request is not normal.

In the above-mentioned service processing system, there is a plurality of the servers and the network device further includes a forwarding module, configured to transmit the service request to a server with a smallest load among a plurality of servers that can process the service request.

Based on the above-mentioned technical solutions, the present disclosure provides the following beneficial technical effects.

A control table for the same service request initiated by the same user is established, and the control table is used for recording the number of times that the user initiates the same one service request in a certain period. When the frequency of its service requests exceeds a set value, the network device discards the service request without forwarding the service request to the server, so as to limit the service requests. Compared with the prior art, attacks on servers from users are effectively avoided, attack difficulty is increased, attack intensity is decreased, impact on the server is reduced, and impact of invalid service requests on the server and attacks on the server from malicious DDOS (Distributed Denial of Service) are reduced, thereby ensuring normal operation of the network. In addition, the server need not to be improved, which saves operator's costs compared with the prior art.

Technical solutions of the present disclosure may be described further in detail below with reference to the accompanying drawings and embodiments.

### BRIEF DESCRIPTION OF THE DRAWING(S)

Fig. 1 is a flow chart of the service processing method according to an embodiment of the present disclosure;

Fig. 2 is a schematic architecture diagram of the network device according to an embodiment of the present disclosure;

Fig. 3 is a schematic architecture diagram of the service processing system including the network device of Fig. 2 according to an embodiment;

Fig. 4 is a schematic architecture diagram of the network device according to another embodiment of the present disclosure;

Fig. 5 is a schematic architecture diagram of the service processing system including the network device of Fig. 4 according to another embodiment.

Fig. 6 is a schematic architecture diagram of the network device according to yet another embodiment of the present disclosure;

Fig. 7 is a schematic architecture diagram of the service processing system including the network device of Fig. 6 according to yet another embodiment;

Fig.8 is a schematic diagram of a service processing system including a plurality of network devices and a plurality of servers; and

Fig.9 is a schematic diagram of a service processing system including a network device and a plurality of servers that serve as backup for each other.

### DETAILED DESCRIPTION

Because a network device has advantages of higher data processing capability and performance over a server in a network and has good capability for suppressing various attacks on a network, a control table is established in a network device according to the present disclosure. The control table used to record a frequency at which the same user sends the same service request to a server. Transmitting service requests to the server is suppressed to protect a high-level server by discarding a service request from the same user having a frequency greater than a set value.

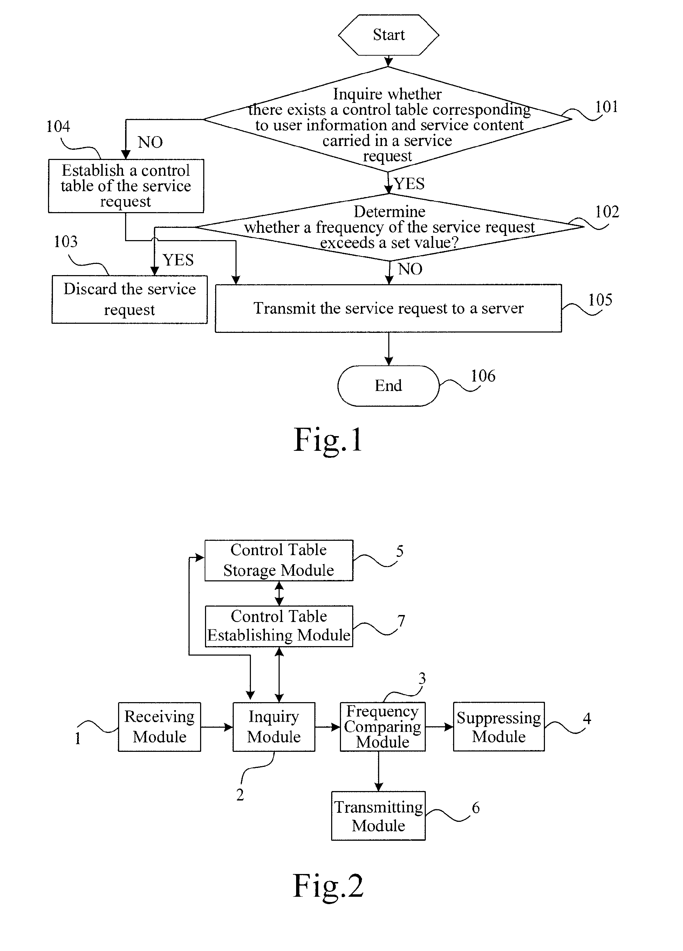

Fig. 1 is a flowchart of the service processing method according to an embodiment of the present disclosure, which may be performed by the network device as shown in Fig. 2 and includes the following steps:

At step 101, the service request information transmitted by a user is received and it is inquired whether there exists a control table corresponding to the user information and service content carried in the received service request. If there exists the control table, step 102 is performed; if there does not exist the control table, step 104 is performed. The user information may be an MAC address, a user name or an IP address of the user. The following Table 1 is a control table. The control table includes at least user information, a service content, a starting timing of a service request, the number of times of the service request, including the number of times of the service request which is time out or fails, the timing of the last request and a preset value indicating an allowed frequency of a request. In addition, the table may also include a Table ID indicating the identification number of the control table.

**Table 1**

| Table ID | MAC Address | IP Address | User Name | Service Content | Starting Timing | Times of Request | Timing of the Last Request | Preset Value |
|---|---|---|---|---|---|---|---|---|
| 001 | 11-22-XX | 1.1.1.1 | USER | Games Update | 2006.1.1, 8:30:30 | 8 | 2006.1.1, 8:40:30 | 3 |

At step 102, it is determined whether a frequency at which the user sends the same service request exceeds the preset value according to the recording of the control table. If the frequency exceeds the preset value, step 103 is performed; if the frequency does not exceed the preset value, step 105 is performed.

A service request is limited by means of the frequency at which the same user sends the service request of same contents and discard a service request with frequency greater than the preset value, so as to effectively avoid attacks on a server from any user, increase the attack difficulty, decrease attack intensity, reduce impacts of invalid service requests on a server and attacks on a server from malicious DDOS.

At step 103, the service request is discarded and then step 106 is performed.

A service request is limited, before sending the service request to a server, so as to reduce impacts of service requests on the server.

Specifically, the control table of the service request is also updated after discarding the service request. That is to say, the timing of the last request and the number of times of the service request are updated by updating the timing of the last request to the request timing of the discarded service request and incrementing the number of times of the request by 1.After updating the control table, after receiving a service request in subsequent procedure, the frequency of a service request may be calculated correctly to determine whether the service request should be limited.

At step 104, a control table of a service request is established according to the user information and service contents carried in the service request. Service contents of the service request, a starting timing, the timing of the last request and the number of times of the request are recorded in this control table.

At step 105, the service request is transmitted to a server.

After transmitting the service request to the server, information related to the service request recorded in the control table, including the timing of the last request and the number of times of the request, is also updated. Specifically, the timing of the last request is updated as a requesting timing of the discarded service request and the number of times of the request is incremented by 1. After updating the control table, after receiving a service request in subsequent procedure, the frequency of the service request may be calculated correctly, so as to determine whether the service requests should be limited.

At step 106, the process ends.

At the step 101, if there does not exist the control table of the service request, it means that the user is transmitting the service request for the first time. In general cases (for example, the number of service requests currently processed by the server for processing this service request is no greater than the maximum number the server can support), this service request may be transmitted directly to the server.

Specifically, after transmitting the service request, if no service request transmitted again from the same user is received in a predetermined period recorded in the control table after the timing of the last request, the control table of the service request, i.e. information related to the service request in the control table, including a service content of the service request, a starting timing, the timing of the last request, the number of times of the request and the set value, is deleted, so as to release storage space.

In the above-mentioned embodiment, after receiving a service request, the network device may also first determine whether the service request is supported, including that whether the network device receive this type of service request and a server connected thereto can process the service request. If the network device supports the service request, step 101 is performed; if the network device does not support the service request, the service request is forwarded to another network device that is connected with this network device and supports this service request. Then, another network device receives the service request and processes the service request according to the procedure of the above-mentioned embodiment.

Further, before step 101, after receiving the service request, the network device also determines whether the number of service requests currently processed by the server is less than the preset value according to the address of the server that processes the service request carried in the service request. If the number of service requests currently processed by the server is less than the preset value, step 101 is performed; if the number of service requests currently processed by the server is more than the preset value, step 103 is performed.

In addition, in case that a server for processing the service request has a backup server both which and the server serve as a backup of each other, the step 105 may be specifically performed through the following operations. The network device determines whether an operating status of a server that is currently processing the service request is normal. If the operating status of the server that is currently processing the service request is normal, the service request is transmitted to the server; if the operating status of the server that is currently processing the service request is not normal, the service request is transmitted to the backup server of the server.

If a network device is connected to a plurality of servers capable of processing the service request, then in the above-mentioned step 105, the network device compares current load conditions of the plurality of servers and transmits the service request to a server with a smallest load.

Fig. 2 is a schematic architecture diagram of the network device according to an embodiment of the present disclosure. The network device as shown in Fig. 2 includes a receiving module 1, an inquiry module 2, a frequency comparing module 3, and a suppressing module 4, a control table storage module 5 connected with the inquiry module 2 and a transmitting module 6 connected with the frequency comparing module 3. The receiving module 1, the inquiry module 2, the frequency comparing module 3 and the suppressing module 4 is serially connected. The inquiry module 2 is also connected with the transmitting module 6.In addition, a control table establishing module 7 is provided between the inquiry module 2 and the control table storage module 5.

The receiving module 1 is configured to receive a service request. The control table storage module 5 is configured to store a control table in which information shown in the above Table 1 may be stored. The inquiry module 2 is configured to inquire in the control table storage module 5 whether there exists the control table corresponding to a user name and service content carried in the received service request. The frequency comparing module 3 is configured to determine whether the frequency of the service request exceeds the set value according to the information stored in the control table. The suppressing module 4 is configured to discard a service request with frequency greater than the set value. The transmitting module 6 is configured to transmit a service request with frequency not greater than the set value, including a service requests without a control table. Because there does not exist the control table corresponding to user information and service content, this service request is regarded as one transmitted for the first time. The control table establishing module 7 is configured to establish a control table of the service request in the control table storage module 5 and record a starting time of the service request, a time of the last request, the number of times of the request and the set value in this control table when there does not exist the control table corresponding to the service request in the control table storage module 5.

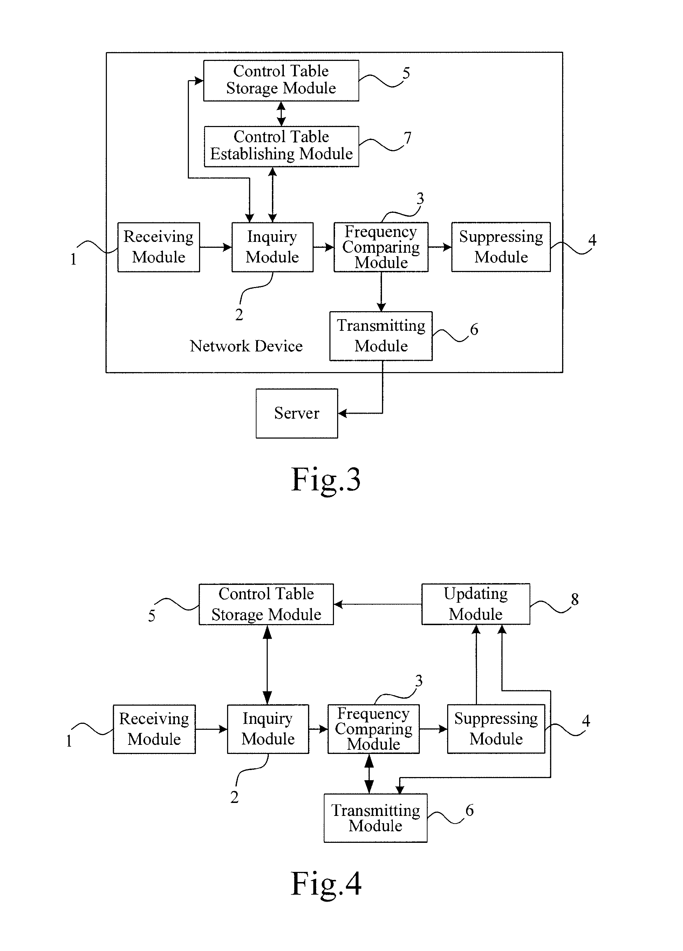

Fig. 3 is a schematic architecture diagram of a service processing system according to an embodiment of the present disclosure including the network device and a server for processing a service request. A service request transmitted to a server is limited by the network device. When the frequency comparing module 3 determines that the number of times of the same service request transmitted from the same user to the server exceeds the preset value, the suppressing module 4 discards this service request, so as to protect the server. If the number of times of the same service request transmitted from the same user to the server is not greater than the set value, the transmitting module 6 transmits the service request to the server to maintain normal service.

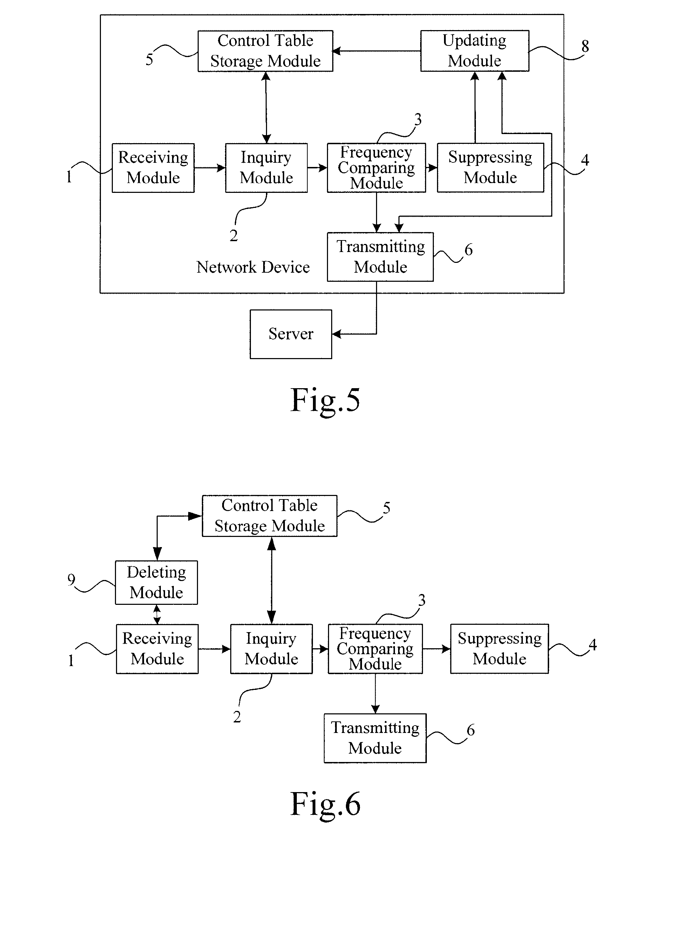

Fig. 4 is a schematic architecture diagram of the network device according to another embodiment of the present disclosure. This network device further includes an updating module 8 that is connected with the suppressing module 4, the transmitting module 6 and the control table storage module 5 respectively. The updating module 8 is configured to update the timing of the last request of the service request and the number of times of the request stored in the control table after discarding or transmitting the service request. Fig. 5 is a schematic architecture diagram of a service processing system according to another embodiment of the present disclosure including the network device and a server for processing a service request. After the suppressing module 4 discards a service request or the transmitting module 6 transmits a service request to a server, the updating module 8 updates the number of times of request of the service request and the timing of the last request, in order to correctly calculate the frequency of the service request after receiving the service request in subsequent procedure, so as to determine whether the service request should be limited.

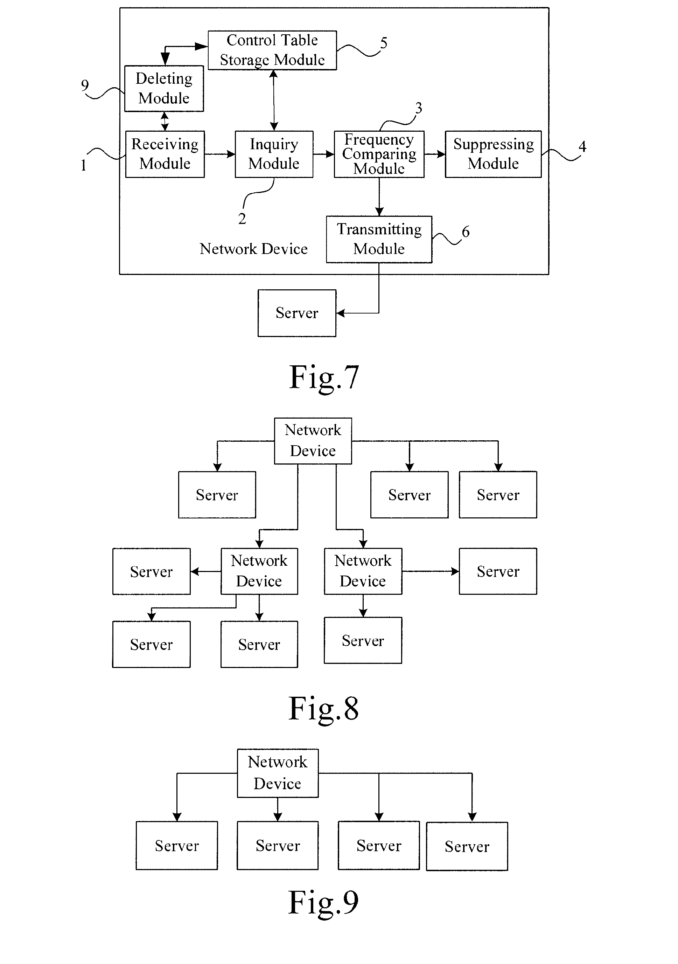

Fig. 6 is a schematic architecture diagram of a network device according to yet another embodiment of the present disclosure. The network device further includes a deleting module 9 that is connected with the receiving module 1 and the control table storage module 5 respectively. The deleting module 9 is configured to delete a control table of the service request, i.e. deletes a starting time of the service request, the timing of the last request, the number of times of the request and a set value when no service request transmitted again from the same user (namely with the same user information) is received in a predetermined period after the timing of last request recorded in the control table of the service request. Fig.7 is a schematic architecture diagram of a service processing system according to yet another embodiment of the present disclosure including the network device and a server for processing service requests. If the deleting module 9 fails to receive the same service request transmitted again from the same user to the server in a predetermined time after the timing of last request recorded in the control table of the service request, the deleting module 9 deletes the control table of the service request, so as to release storage space.

An authentication module 10 is further provided between the receiving module 1 and the inquiry module 2 in any one of the above network devices. The authentication module 10 is configured to determine whether the network device support the received service request. The step for determining includes determining whether the network device receives this type of service request and whether a server connected thereto can process the service request. If the network device supports the service request, the service request is transmitted to the inquiry module 2; if the network device does not support the service request, the service request is forwarded to another network device connected to the network device and supporting the service request. Fig.8 shows a schematic diagram of the service processing system including a plurality of network devices and a plurality of servers. One of the network devices may be connected to a server and other network devices, and may be connected only to a server. Each server may support different types of service request. After a network device receives a service request, if the network device determines that a server connected thereto does not support the service request, the network device may transmit the service request to a server that supports the service request or a network device that supports the service request, which in turn transmits the service request to a server connected thereto.

A number comparing module 11 is further provided between the receiving module 1 and the inquiry module 2 in any one of the network devices as shown in Fig. 2, Fig. 4 and Fig. 6. The number comparing module 11 is also connected to the suppressing module 4. And, the number comparing module 11 is configured to determine whether the number of service requests currently processed by the server is less than a preset value according to an address of the server that processes the service request carried in the service request. If the number of service requests currently processed by the server is less than the preset value, the service request is transmitted to the inquiry module 2; otherwise, the service request is transmitted directly to the suppressing module 4 to discard this service request.

Further, a status detection module 12 may be provided between the frequency comparing module 3 and the transmitting module 6 in any one of the network devices as shown in Fig. 2, Fig. 4 and Fig. 6. The status detection module 12 is configured to determine whether the operation status of the server that is currently processing service request is normal. If the operation status of the server is normal, the service request is transmitted to the server; if the operation status of the server is not normal, the service request is transmitted to a backup server both which and the server serve as a backup of each other, or the service request is transmitted to a selected one of the backup servers. Fig.9 shows a schematic diagram of the service processing system including the network device and a plurality of servers as backup of each other. The servers may be in a 1:1 backup relation, or it is possible that one or more servers are active while other servers serve as common backup servers for the specified server or the currently active servers. When a service request satisfies conditions of a server to which the service request is transmitted, the status detection module 12 determines that the status of the server that currently processes service requests is normal, in order to transmit the service request to the server. If the status is not normal, the transmitting module 6 may transmit the service request to a backup server of the server.

In addition, the transmitting module 6 in any one of the network devices as shown in Fig. 2, Fig. 4 and Fig. 6 may also be connected to a forwarding module 13. The transmitting module 6 is configured to forward the service request to a server with a smallest load, after comparing loads of a plurality of servers connected thereto that can process the service request.

The overall advantageous effects of the present disclosure are as follows. Attacks on a server from users are effectively avoided, attack difficulty is increased, attack intensity is decreased, and impact of invalid service requests on a server and attacks on a server from malicious DDOS are reduced, thereby ensuring normal operation of the network and enhancing users' satisfaction. In addition, a server need not be improved, which saves operator's costs.

Finally, it should be noted that the above embodiments are only for the purpose of illustrating technical solution of the present disclosure, but not for limiting the present disclosure. While the present disclosure has been explained in detail with reference to the above-mentioned preferred embodiments, those skilled in the art should understand that modifications or equivalent substitutions may be made to the technical solution of the present disclosure without departing the spirit and scope of the technical solution of the present invention.

## Claims

1. A service processing method, comprising:
determining whether a frequency of a service request initiated by a user exceeds a set value according to user information carried in a received service request;
discarding the service request, if the frequency of the service request exceeds the set value; and
transmitting the service request, if the frequency of the service request does not exceed the set value.

2. The service processing method of claim 1, wherein the process of determining whether the frequency of the service request initiated by the user exceeds the set value comprises:
inquiring whether there exists a control table corresponding to user information and service content carried in the service request;
determining whether the frequency of the service request exceeds the set value according to the control table, if there exists the control table; and
establishing the control table of the service request according to the user information and the service content if there does not exist the control table, wherein the user information, the service content of the service request, a starting timing, the number of times of the request and the set value are recorded in the established control table; and transmitting the service request.

3. The service processing method of claim 1 or 2, wherein the user information is an MAC address, a user name or an IP address.

4. The service processing method of claim 1 or 2, further comprising:
updating the timing of a last service request and the number of times of the service request in the control table after discarding the service request or transmitting the service request.

5. The service processing method of claim 4, further comprising: deleting the control table of the service request if no service request transmitted from the user is received in a predetermined time after the timing of the last service request.

6. The service processing method of claim 1, further comprising:
determining whether the service request is supported, after a network device receives the service request;
performing the process of determining whether the frequency at which the user initiates the service request exceeds the set value according to the user information carried in the received service request, if the service request is supported;
forwarding the service request to another network device that supports the service request, if the service request is not supported; and
receiving, by the another network device, the service request and then performing the step of determining whether the frequency at which the user initiates the service request exceeds the set value according to the user information carried in the received service request.

7. The service processing method of claim 1, further comprising:
determining whether the number of the service requests currently processed by a server is less than a preset value according to an address of the server that processes the service request carried in the service request, after the network device receives the service request;
performing the process of determining whether the frequency at which the user initiates the service request exceeds the set value according to the user information carried in the received service request, if the number of the service requests currently processed by the server is less than the preset value; and
discarding the service request, if the number of the service requests currently processed by the server is not less than the preset value.

8. The service processing method of claim 1, wherein the process of transmitting the service request comprises:
determining, by the network device, whether operation status of a server that is currently processing the service request is normal;
transmitting the service request to the server, if the operation status of the server that is currently processing the service request is normal; and
transmitting the service request to a backup server both which and the server serve as a backup of each other, if the operation status of the server that is currently processing the service request is not normal;
or, the process of transmitting the service request comprises:
transmitting, by the network device, the service request to a server with a smallest load among a plurality of servers that can process the service request.

9. A network device, comprising:
a receiving module, configured to receive a service request;
a control table storage module, configured to store a control table that includes user information, service content of a user request, a starting timing of the service request, the timing of a last request, the number of times of the request and a set value;
an inquiry module, configured to inquire in the control table storage module whether there exists the control table corresponding to user information and a service content carried in the received service request;
a frequency comparing module, configured to determine whether the frequency of the service request exceeds the set value according to the control table;
a suppressing module, configured to discard a service request having a frequency greater than the set value; and
a transmitting module, configured to transmit a service request having a frequency not greater than the set value.

10. The network device of claim 9, further comprising a control table establishing module, configured to establish the control table of the service request, and to record service content of the service request, starting timing, the timing of the last request, the number of times of the request and the set value in the control table.

11. The network device of claim 9, further comprising an updating module, configured to update the timing of the last service request and the number of times of the service request in the control table.

12. The network device of claim 9, further comprising a deleting module, configured to delete the control table of the service request if no service request transmitted from the user is received in a predetermined time after the timing of the last service request.

13. The network device of any one of claims 9 to 12, further comprising an authentication module, configured to determine whether the service request is supported, and the network device forwards the service request to another network device that supports the service request if the service request is not supported.

14. The network device of any one of claims 9 to 12, further comprising: a number comparing module, configured to:
determine whether the number of service requests currently processed by the server is less than a preset value according to an address of the server that processes the service request carried in the service request;
transmit the service request to the inquiry module if the number of service requests currently processed by the server is less than the preset value; and
transmit the service request to the suppressing module if the number of service requests currently processed by the server is not less than the preset value.

15. The network device of any one of claims 9 to 12, further comprising a status detection module, configured to:
determine whether operation status of the server that is currently processing the service request is normal;
transmit the service request to the server if the operation status of the server that is currently processing the service request is normal; and
transmit the service request to a backup server if the operation status of the server that is currently processing the service request is not normal.

16. The network device of any one of claims 9 to 12, further comprising a forwarding module, configured to transmit the service request to a server with a smallest load among a plurality of servers that can process the service request.

17. A service processing system, comprising a server for processing service requests, wherein the service processing system further comprises a network device comprising:
a receiving module, configured to receive a service request;
a control table storage module , configured to store a control table comprising user information, a service content of a user request, a starting timing of the service request, the timing of a last request, the number of times of the request and the set value;
an inquiry module, configured to inquire in the control table storage module whether there exists the control table corresponding to the user information and the service content carried in the received service request;
a frequency comparing module, configured to determine whether a frequency of the service request exceeds the set value according to the control table;
a suppressing module, configured to discard a service request having a frequency greater than the set value; and
a transmitting module, configured to transmit a service request having a frequency not greater than the set value.

18. The service processing system of claim 17, wherein the network device further comprises a control table establishing module, configured to: establish the control table of the service request, and record the service content of the service request, the starting time, the timing of the last request, the number of times of the request and the set value in the control table.

19. The service processing system of claim 17, wherein the network device further comprises an updating module, configured to update the timing of the last request and the number of times of the request of the service request in the control table.

20. The service processing system of claim 17, wherein the network device further comprises a deleting module, configured to delete the control table of the service request if no service request transmitted from the user is received in a predetermined time after the timing of the last request.

21. The service processing system of any one of claims 17 to 20, wherein the network device further comprises an authentication module, configured to determine whether the service request is supported.

22. The service processing system of any one of claims 17 to 20, wherein the network device further comprises a number comparing module, configured to:
determine whether the number of service requests currently processed by the server is less than a preset value according to an address of the server that processes the service request carried in the service request;
transmit the service request to the inquiry module if the number of service requests currently processed by the server is less than the preset value; and
transmit the service request to the suppressing module if the number of service requests currently processed by the server is not less than the preset value.

23. The service processing system of any one of claims 17 to 20, further comprising a standby server both which and the server serve as a standby server of each other,
wherein the network device further comprises a status detection module, configured to:
determine whether operation status of a server that is currently processing the service request is normal;
transmit the service request to the server if the operation status of the server that is currently processing the service request is normal; and
transmit the service request to the backup server if the operation status of the server that is currently processing the service request is not normal.

24. The service processing system of any one of claims 17 to 20, wherein the servers are multiple, wherein the network device further comprises a forwarding module, configured to transmit the service request to a server with a smallest load among a plurality of servers that can process the service request.
